# EUROPEAN PATENT APPLICATION

(11) **EP 3 869 887 A1**
(43) Date of publication of application: **25.08.2021**
(21) Application number: 19888506.3
(22) Date of filing: 27.11.2019
(51) Int. Cl.: H04W 72/04, H04W 72/12, H04L 5/00

(54) **TRANSMISSION METHOD AND DEVICE**

(30) Priority: 29.11.2018 CN 201811447788
(71) Applicant: Huawei Technologies Co., Ltd., Longgang District Shenzhen, Guangdong 518129 (CN)
(72) Inventor: PENG, Jinlin, Shenzhen, Guangdong 518129 (CN); LIU, Zhe, Shenzhen, Guangdong 518129 (CN); TANG, Hao, Shenzhen, Guangdong 518129 (CN); TANG, Zhenfei, Shenzhen, Guangdong 518129 (CN)
(74) Representative: Epping - Hermann - Fischer
(86) International application number: PCT/CN2019/121241
(87) International publication number: WO 2020/108524

(57) **Abstract**

This application provides a data transmission method and an apparatus. The method includes: Afirst device sends a reference signal to a second device in a first time unit; and the first device transmits data to or receives data from the second device in a second time unit based on the reference signal. The second time unit includes scheduling resources of a control channel and a shared channel, and the first time unit and the second time unit do not overlap in time domain. The transmission method and the apparatus in the embodiments of this application help improve data transmission reliability.

## Description

This application claims priority to Chinese Patent Application No. 201811447788.5, filed with the China National Intellectual Property Administration on November 29, 2018 and entitled "TRANSMISSION METHOD AND APPARATUS", which is incorporated herein by reference in its entirety.

### TECHNICAL FIELD

This application relates to the communication field, and in particular, to a transmission method and an apparatus in the communication field.

### BACKGROUND

In a wireless communication system, a terminal and a base station perform wireless communication based on a radio communication technology. An uplink (uplink, UL) carrier is used to carry uplink communication between the terminal and the base station, and a downlink (downlink, DL) carrier is used to carry downlink communication between the terminal and the base station.

With the increase of wireless multimedia services, a conventional way for providing services cannot meet service requirements of a large number of users in different environments, so that the industrial internet and a device-to-device (for example, vehicle-to-vehicle (vehicle-to-vehicle), vehicle-to-infrastructure (vehicle-to-infrastructure), or vehicle-to-user (vehicle-to-pedestrians)) communication technology emerge, and a sidelink (sidelink, SL) is used to carry device-to-device communication.

Therefore, based on a current communication environment, for example, during implementation of the foregoing industrial internet, device-to-device communication technology, or another communication technology, some services have a relatively high requirement on data transmission reliability. How to improve data transmission reliability or a throughput becomes a technical problem to be urgently resolved.

### SUMMARY

This application provides a transmission method and an apparatus, to help improve data transmission reliability.

According to a first aspect, a transmission method is provided, including: A first device sends a reference signal to a second device in a first time unit, and the first device transmits data and/or control signaling to or receives data and/or control signaling from the second device in a second time unit.

According to the transmission method in this embodiment of this application, the reference signal and the data are separately sent in different time periods, so that the data can be centrally transmitted in a period of time, thereby improving data transmission reliability.

With reference to the first aspect, in some implementations of the first aspect, the reference signal may be used by the second device to obtain or send the data. For example, during communication between a terminal and a base station, when the reference signal is used for uplink transmission, the terminal may send data to the base station; or when the reference signal is used for downlink transmission, the base station may send data to the terminal. For another example, during communication between a first terminal and a second terminal, the first terminal may send data to the second terminal or receive data from the second terminal based on the reference signal.

With reference to the first aspect, in some implementations of the first aspect, the first time unit and the second time unit do not overlap in time domain. For example, non-overlapping may be understood as that the first time unit and the second time unit each include several different symbols, or there is no same symbol in the first time unit and the second time unit. Alternatively, the first time unit and the second time unit may include different symbols in one slot. Alternatively, the first time unit and the second time unit may be in different slots. In this case, data transmission and reference signal transmission may be fully separated in time domain, thereby avoiding interference caused by the reference signal to the data, and improving data transmission reliability.

With reference to the first aspect, in some implementations of the first aspect, the first time unit and the second time unit may be associated with a cycle time (cyclic time, CT). Specifically, the first time unit and the second time unit may be in a same CT or in different CTs. For example, the cycle time includes the first time unit and the second time unit, the first time unit is before the second time unit, the reference signal is transmitted in the first time unit, and the data is transmitted in the second time unit. For another example, if the cycle time is two CTs, the first CT includes the first time unit, and the second CT includes the second time unit. The first time unit is before the second time unit. In this case, the reference signal is transmitted in the first time unit, and data of a downlink service and/or data of an uplink service are/is transmitted in the second time unit.

With reference to the first aspect, in some implementations of the first aspect, the second time unit may include scheduling resources of a control channel and a shared channel, or the second time unit may be mapped to a scheduling resource. For example, the scheduling resource of the data may be understood as a resource allocated to a transmit end, and the transmit end sends the data to a receive end by using the scheduling resource.

In this embodiment of this application, the scheduling resource may be transmitted by using an air interface resource. The air interface resource may include at least one of a time domain resource, a frequency domain resource, and a code domain resource, for example, a resource of a physical downlink control channel (physical downlink control channel, PDCCH), a resource of a physical downlink shared channel (physical downlink shared channel, PDSCH), or a resource of a physical uplink shared channel (physical uplink shared channel, PUSCH).

In this embodiment of this application, the scheduling resource may be transmitted by using a sidelink resource. The sidelink resource may include at least one of a time domain resource, a frequency domain resource, and a code domain resource, for example, a resource of a physical sidelink shared channel (physical sidelink shared channel, PSSCH) or a resource of a physical sidelink control channel (physical sidelink control channel, PSCCH).

With reference to the first aspect, in some implementations of the first aspect, the first device sends reference signal information to the second device, where the reference signal information indicates a reference position of the reference signal in the first time unit.

The reference signal includes at least one of the following: a demodulation reference signal (demodulation reference signal, DMRS), a sounding reference signal (sounding reference signal, SRS), a signal carried on a physical random access channel (physical random access channel, PRACH), a synchronization signal, a phase tracking reference signal (phase-tracking reference signals, PTRS), or a channel state information-reference signal (channel state information-reference signal, CSI-RS).

In this embodiment of the present invention, by flexibly configuring time domain reference start point information of the reference signal, the first device may send the reference signal to the second device by using at least one slot or mini-slot as a periodicity, and may implement decoupling between the reference signal transmission and the data transmission. Based on a service model feature and a channel environment feature, a compromise between channel estimation and reference signal overheads is achieved, so that resource utilization can be maximized. The foregoing manner is not only applicable to eMBB transmission, but also applicable to URLLC transmission.

With reference to the first aspect, in some implementations of the first aspect, the reference signal information includes a start position of the first time unit; or the reference signal information includes a start position and an offset value of the first time unit, where the offset value is a time length relative to the start position.

With reference to the first aspect, in some implementations of the first aspect, the first device may use at least one of radio resource control (radio resource control, RRC) signaling, media access control control element (media access control control element, MAC CE) signaling, or downlink control information (downlink control information, DCI) to indicate the reference signal information.

In this embodiment of the present invention, for example, the first device sends a radio resource control RRC message to the second device, where the RRC message includes the reference signal information. For another example, the first device sends a downlink control indicator DCI to the second device, where the DCI is used to indicate the reference position of the reference signal in the first time unit. A format of the DCI and each field in the DCI are not limited in this embodiment of the present invention. For example, the DCI format may be an existing DCI format, or may be a newly designed DCI format.

Optionally, the first device sends a first downlink control indicator DCI to the second device on a plurality of symbols, and a time domain reference start point position of the reference signal is any one of the following: a start position of a slot that carries the DCI, a start symbol of the plurality of symbols, or an end symbol of the plurality of symbols. With reference to the first aspect, in some implementations of the first aspect, the first device sends indication information to the second device, to indicate the second device to disable the reference signal in the scheduling resource.

In this embodiment of the present invention, the reference signal is disabled, so that data can be centrally transmitted in a period of time, and no reference signal needs to be transmitted or a small quantity of reference signals need to be transmitted. In this way, transmission resources for scheduling the data in a real-time service time period are increased as much as possible, thereby improving data transmission reliability.

Optionally, the scheduling resource may be a scheduling resource corresponding to the second time unit. For example, the indication information may indicate the second device to ignore or discard a reference signal on a control channel and/or a shared channel; or after receiving the indication information, the second device ignores or discards the reference signal.

With reference to the first aspect, in some implementations of the first aspect, the first device sends the reference signal information to the second device, where the reference signal information is used to indicate reference signal information required by the PDSCH to perform channel estimation, and the reference signal information may include a time length and/or (start) position information occupied by the reference signal in the first time unit.

For example, when the reference signal is any one of a CSI-RS, a TRS, a PTRS, a DRS, and an SRS, the reference signal has at least one of the following same parameters as the control channel and/or the shared channel: a precoding matrix, a QCL, and an antenna port. In this way, a receiver can perform channel estimation based on the same parameter, thereby improving data transmission reliability.

With reference to the first aspect, in some implementations of the first aspect, numerologies of the first time unit and the second time unit may be the same or may be different.

For example, the second device supports receiving of the reference signal in the first time unit and the second time unit that have a same numerology, but does not support receiving of the reference signal in both the first time unit and the second time unit that have different numerologies. For another example, regardless of whether the numerologies of the first time unit and the second time unit are the same, the second device supports receiving of the reference signal in the first time unit and the second time unit.

According to a second aspect, a transmission method is provided, including: A second device receives a reference signal from a first device in a first time unit, and receives data from the first device or sends data to the first device in a second time unit.

According to the transmission method in this embodiment of this application, the reference signal and the data are separately sent in different time periods, so that the data can be centrally transmitted in a period of time, thereby improving data transmission reliability.

With reference to the second aspect, in some implementations of the second aspect, the reference signal may be used by the second device to obtain or send the data.

With reference to the second aspect, in some implementations of the second aspect, the second device receives the data from the first device or sends the data to the first device in the second time unit based on the reference signal. With reference to the second aspect, in some implementations of the second aspect, the first time unit and the second time unit may be associated with a cycle time (cyclic time, CT). For example, the first time unit and the second time unit may be in a same CT or in different CTs.

With reference to the second aspect, in some implementations of the second aspect, the second time unit includes scheduling resources of a control channel and/or a shared channel, or the second time unit may be mapped to a scheduling resource.

With reference to the second aspect, in some implementations of the second aspect, the first time unit and the second time unit do not overlap in time domain. Data transmission and reference signal transmission may be fully separated in time domain, thereby avoiding interference caused by the reference signal to the data, and improving data transmission reliability.

With reference to the second aspect, in some implementations of the second aspect, the second device receives reference signal information from the first device, where the reference signal information indicates a reference position of the reference signal in the first time unit.

With reference to the second aspect, in some implementations of the second aspect, the reference signal information includes a start position of the first time unit; or the reference signal information includes a start position and an offset value of the first time unit, where the offset value is a time length relative to the start position.

With reference to the second aspect, in some implementations of the second aspect, the second device determines, based on the reference signal information, the reference position of the reference signal in the first time unit.

With reference to the second aspect, in some implementations of the second aspect, the second device receives a radio resource control RRC message from the first device, where the RRC message includes the reference signal information. With reference to the second aspect, in some implementations of the second aspect, the second device receives a downlink control indicator DCI from the first device, where the DCI is used to indicate the reference position of the reference signal in the first time unit.

With reference to the second aspect, in some implementations of the second aspect, when the first time unit is a plurality of symbols in a slot, the second device receives the downlink control indicator DCI from the first device based on the plurality of symbols, where the reference position is any one of the following: a start position of the slot; a start symbol of the plurality of symbols; or an end symbol of the plurality of symbols.

With reference to the second aspect, in some implementations of the second aspect, the second device determines, based on the reference signal information, the reference position of the reference signal in the first time unit.

With reference to the second aspect, in some implementations of the second aspect, the second device receives indication information sent by the first device, and the second device disables the reference signal in the scheduling resource based on the indication information.

In this embodiment of the present invention, the reference signal is disabled, so that data can be centrally transmitted in a period of time, and no reference signal needs to be transmitted or a small quantity of reference signals need to be transmitted. In this way, transmission resources for scheduling the data in a real-time service time period are increased as much as possible, thereby improving data transmission reliability.

With reference to the second aspect, in some implementations of the second aspect, the second device receives the reference signal information sent by the first device, where the reference signal information is used to indicate reference signal information required by the PDSCH to perform channel estimation, and the reference signal information may include a time length and/or (start) position information occupied by the reference signal in the first time unit.

With reference to the second aspect, in some implementations of the second aspect, numerologies of the first time unit and the second time unit may be the same or may be different.

It should be understood that "transmission" in the embodiments of this application should be flexibly understood. To be specific, "transmission" sometimes has a meaning of "sending", and sometimes has a meaning of "receiving".

According to a third aspect, an apparatus is provided, configured to perform the method according to any one of the first aspect or the possible implementations of the first aspect, or configured to perform the method according to any one of the second aspect or the possible implementations of the second aspect. Specifically, the apparatus includes a unit configured to perform the method according to any one of the first aspect or the possible implementations of the first aspect, or a unit configured to perform the method according to any one of the second aspect or the possible implementations of the second aspect.

According to a fourth aspect, an apparatus is provided. The apparatus includes a transceiver, a memory, and a processor. The transceiver, the memory, and the processor communicate with each other by using an internal connection path. The memory is configured to store instructions. The processor is configured to execute the instructions stored in the memory, to control a receiver to receive a signal and control a transmitter to send a signal. In addition, when the processor executes the instructions stored in the memory, the execution enables the processor to perform the method according to any one of the first aspect or the possible implementations of the first aspect, or the execution enables the processor to perform the method according to any one of the second aspect or the possible implementations of the second aspect.

According to a fifth aspect, a computer program product is provided. The computer program product includes computer program code, and when the computer program code is run by a computing device, the computing device is enabled to perform the method according to any one of the first aspect or the possible implementations of the first aspect, or the computing device is enabled to perform the method according to any one of the second aspect or the possible implementations of the second aspect.

According to a sixth aspect, a computer-readable medium is provided, configured to store a computer program. The computer program includes instructions used to perform the method according to any one of the first aspect or the possible implementations of the first aspect, or includes instructions used to perform the method according to any one of the second aspect or the possible implementations of the second aspect.

According to a seventh aspect, a chip is provided, including a processor, configured to invoke a computer program from a memory and run the computer program, so that an apparatus on which the chip is installed performs the method according to any one of the first aspect or the possible implementations of the first aspect, or performs the method according to any one of the second aspect or the possible implementations of the second aspect.

### BRIEF DESCRIPTION OF DRAWINGS

FIG. 1 is a schematic diagram of a communication system according to an embodiment of this application;
FIG. 2 is a schematic diagram of another communication system according to an embodiment of this application;
FIG. 3a and FIG. 3b are a schematic diagram of a configuration of a BWP in a carrier bandwidth according to an embodiment of this application;
FIG. 4 is a schematic flowchart of a transmission method according to an embodiment of this application;
FIG. 5 is a schematic block diagram of an apparatus according to an embodiment of this application;
FIG. 6 is a schematic block diagram of another apparatus according to an embodiment of this application; and
FIG. 7 is a schematic block diagram of another apparatus according to an embodiment of this application.

### DESCRIPTION OF EMBODIMENTS

The following describes the technical solutions in this application with reference to the accompanying drawings.

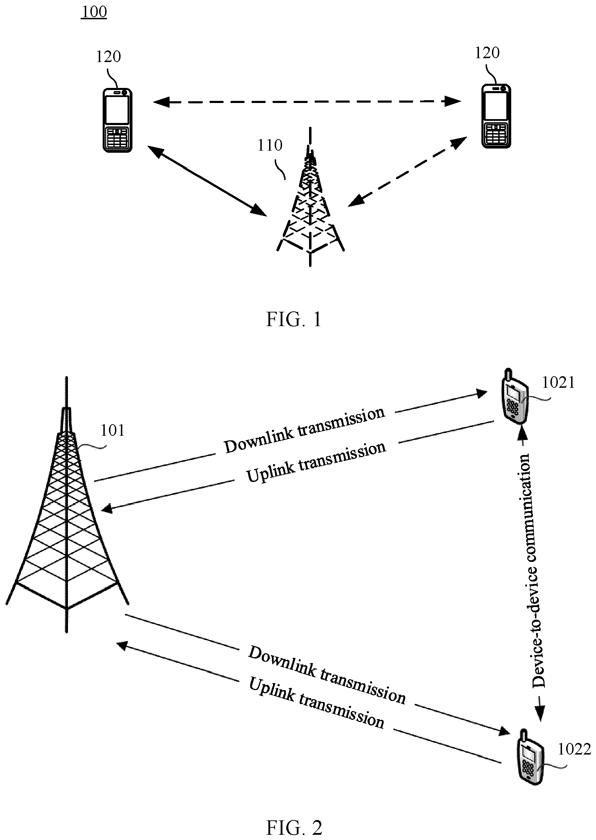

The technical solutions in the embodiments of this application may be used in various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS) system, a worldwide interoperability for microwave access (worldwide interoperability for microwave access, WiMAX) communication system, and a future 5th generation (5th generation, 5G) system or new radio (new radio, NR) system. FIG. 1 shows a communication system 100 to which an embodiment of this application is applied. The communication system 100 may include at least one network device 110. The network device 110 may be a device, for example, a base station or a base station controller, that communicates with a terminal device. Each network device 110 may provide communication coverage for a specific geographical area, and may communicate with terminal devices in the coverage (cell). The network device 110 may be a base transceiver station (base transceiver station, BTS) in a global system for mobile communications (global system for mobile communications, GSM) system or a code division multiple access (code division multiple access, CDMA) system, a NodeB (NodeB, NB) in a wideband code division multiple access (wideband code division multiple access, WCDMA) system, an evolved NodeB (evolved NodeB, eNB, or eNodeB) in an LTE system, or a radio controller in a cloud radio access network (cloud radio access network, CRAN) scenario. Alternatively, the network device may be a relay node, an access point, a vehicle-mounted device, a wearable device, or a network device in a future 5G network, for example, a gNodeB (gNodeB or gNB) or a transmission reception point (transmission receiving point/transmission reception point, TRP) in new radio (new radio, NR). Alternatively, the network device 110 may be a network device in a future evolved public land mobile network (public land mobile network, PLMN) network, or the like. This is not limited in this embodiment of this application. The communication system 100 further includes one or more terminal devices 120 within coverage of the network device 110. The terminal device 120 may be mobile or fixed. The terminal device 120 may be an access terminal, user equipment (user equipment, UE), a subscriber unit, a subscriber station, a mobile station, a mobile console, a remote station, a remote terminal, a mobile device, a user terminal, a terminal, a wireless communication device, a user agent, or a user apparatus. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in this embodiment of this application.

FIG. 1 shows one network device and two terminal devices as an example. Optionally, the communication system 100 may include a plurality of network devices, and another quantity of terminal devices may be included in coverage of one network device. This is not limited in this embodiment of this application.

FIG. 2 shows another communication system to which an embodiment of this application is applied. The communication system may include a network device 101, a second device 1021, and a second terminal device 1022. The network device 101, the second device 1021, and the second terminal device 1022 may perform transmission by using an air interface resource. The air interface resource may include at least one of a time domain resource, a frequency domain resource, and a code domain resource. Specifically, when the network device and the terminal device transmit data, the network device may send control information to the terminal through a control channel, for example, a physical downlink control channel (physical downlink control channel, PDCCH), to allocate a resource of a data channel, for example, a physical downlink shared channel (physical downlink shared channel, PDSCH) or a physical uplink shared channel (physical uplink shared channel, PUSCH) to the terminal. For example, the control information may indicate a symbol and/or an RB to which the data channel is mapped. The network device and the terminal device transmit data on the allocated time-frequency resource through the data channel. The data transmission may include downlink data transmission and/or uplink data transmission. The downlink data (for example, data carried on the PDSCH) transmission may be that the network device sends data to the terminal device, and the uplink data (for example, data carried on the PUSCH) transmission may be that the terminal device sends data to the network device. The data may be data in a broad sense, for example, may be user data, or may be system information, broadcast information, or other information.

In the communication system shown in FIG. 2, data transmission may also be performed between the second device 1021 and the second terminal device 1022 by using a sidelink resource. Similar to an air interface resource, the sidelink resource may also include at least one of a time domain resource, a frequency domain resource, or a code domain resource. Specifically, a physical channel for data transmission between the second device and the second terminal device may include a physical sidelink shared channel (physical sidelink shared channel, PSSCH) and/or a physical sidelink control channel (physical sidelink control channel, PSCCH). The PSSCH is used to transmit data, and the PSCCH is used to transmit control information, for example, scheduling assignment (scheduling assignment, SA) information.

The following briefly describes terms in the embodiments of the present invention.

BWP: In a 5G NR system, to adapt to a bandwidth capability of a terminal device, a BWP may be configured for the terminal device in a bandwidth supported by one carrier (which may be referred to as a carrier bandwidth, and a specific value may be 10 MHz, 15 MHz, 20 MHz, 50 MHz, 100 MHz, 400 MHz, or the like). A plurality of BWPs may be configured in one carrier, for example, four BWPs can be configured in one carrier. The BWP may also be sometimes referred to as a carrier bandwidth part (carrier bandwidth part), a subband (subband) bandwidth, a narrowband (narrowband) bandwidth, or another name. The name is not limited in this application. For ease of description, an example in which the name is the BWP is used for description. For example, one BWP includes K (K>0) subcarriers. Alternatively, one BWP is a frequency domain resource on which N non-overlapping RBs are located, and a subcarrier spacing of the RBs may be 15 kHz, 30 kHz, 60 kHz, 120 kHz, 240 kHz, 480 kHz, or another value. Alternatively, one BWP is a frequency domain resource on which M non-overlapping resource block groups (resource block group, RBG) are located. For example, one RBG includes P (P>0) consecutive RBs, and a subcarrier spacing (subcarrier spacing, SCS) of the RBs may be 15 kHz, 30 kHz, 60 kHz, 120 kHz, 240 kHz. 480 kHz, or another value, for example, an integer multiple of 2.

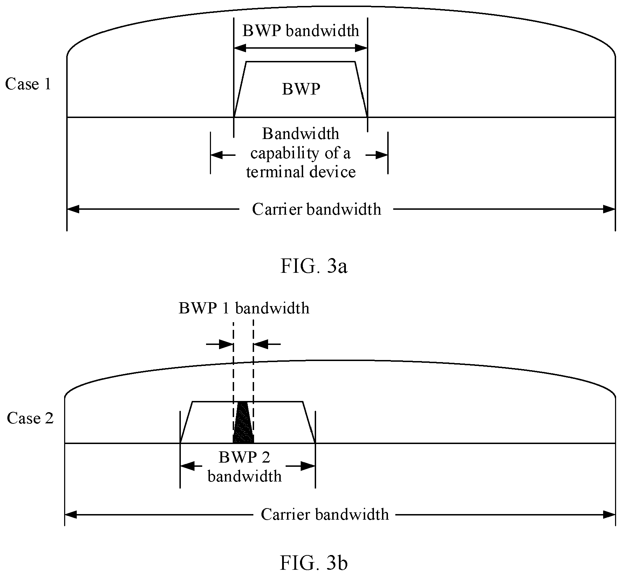

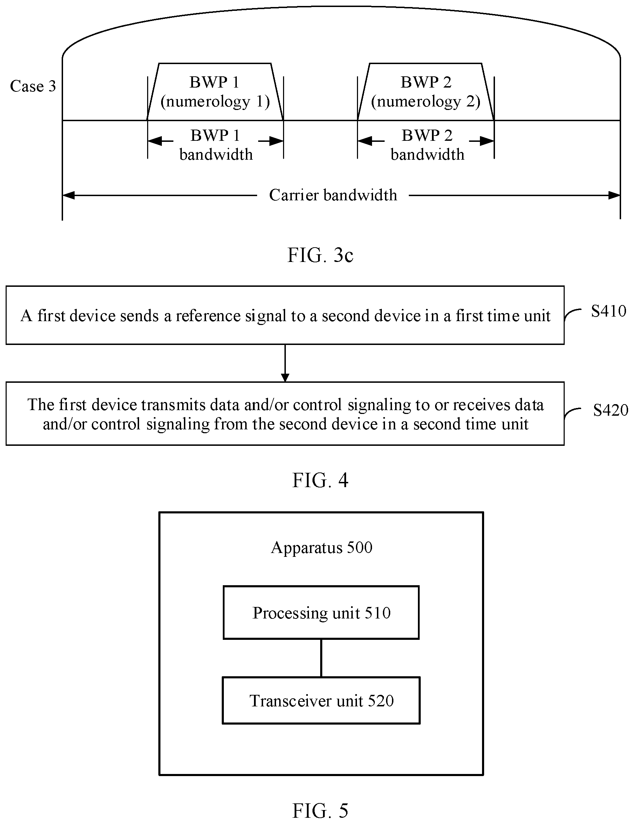

FIG. 3a to FIG. 3c show three configurations of BWPs in a carrier bandwidth according to an embodiment of this application. FIG. 3a shows a case in which one BWP is configured in the carrier bandwidth. A network device may first allocate, to a terminal device, a BWP within a bandwidth capability range of the terminal, and certainly, may further allocate some or all resources in the BWP to the terminal device for communication. The network device can configure different BWPs for the terminal device based on actual scenarios. For example, to reduce power consumption of the terminal device, the network device may allocate a BWP to the terminal device based on a service volume of the terminal device. When the terminal device does not need to transmit service data or needs to transmit a small amount of service data, a relatively small BWP, such as a BWP 1 shown in FIG. 3b, may be allocated to the terminal device to receive control information and a small amount of data information. When the terminal device needs to transmit a large amount of service data, a relatively large BWP, such as a BWP 2 shown in FIG. 3b, may be allocated to the terminal device. For another example, because a plurality of service types and communication scenarios may be supported in 5G, different parameters may be configured for different service types and communication scenarios. The network device may allocate corresponding BWPs to the terminal device based on different service types of the terminal device. As shown in FIG. 3c, one BWP may correspond to one service type. To meet a service requirement of the service type, a numerology (numerology) that can meet the service requirement may be configured for the BWP. It can be learned from FIG. 3b that different BWPs may occupy partially overlapping frequency domain resources. It can be learned from FIG. 3c that different BWPs may also occupy completely different frequency domain resources and use different numerologies. In this embodiment of this application, numerologies corresponding to different BWPs may be the same or may be different. This is not limited in this application. It may be understood that in FIG. 3a to FIG. 3c, an example in which one or two BWPs are configured in one carrier is used for description. In actual application, a plurality of BWPs may be configured in the carrier. This is not limited in this application.

Numerology (numerology): The numerology is a parameter used in a communication system. For example, the numerology may be a series of physical layer parameters in an air interface. One BWP may correspond to one numerology. An NR system may support a plurality of numerologies, and the plurality of numerologies may be used at the same time. The numerology may include one or more of the following parameter information: a subcarrier spacing, information about a cyclic prefix (cyclic prefix, CP), time unit information, a bandwidth, and the like. The information about the CP may include a CP length and/or a CP type. For example, the CP may be a normal CP (normal CP, NCP) or an extended CP (extended CP, ECP). The time unit information is used to indicate a time unit in time domain, and may be, for example, a sampling point, a symbol, a mini-slot (mini-slot), a slot (slot), a subframe (subframe), or a radio frame. The time unit information may include a type, a length, a structure, or the like of the time unit. For example, the numerology may include a subcarrier spacing and a CP. As shown in Table 1, Table 1 shows numerologies that can be currently supported in the NR system and that is defined by the subcarrier spacing and the CP.

**Table 1**

| *µ* | Subcarrier spacing=2*^{µ}* ·15 (kHz) | **CP type** |
|---|---|---|
| 0 | 15 | Normal (normal) |
| 1 | 30 | Normal |
| 2 | 60 | Normal or extended (extended) |
| 3 | 120 | Normal |
| 4 | 240 | Normal |

*µ* is used to determine the subcarrier spacing. For example, when *µ* =0, the subcarrier spacing is 15 kHz; when *µ* =1, the subcarrier spacing is 30 kHz. The subcarrier spacing is used as an example. If a terminal supports subcarrier spacings of 15 kHz and 30 kHz, a network device may allocate a BWP with a subcarrier spacing of 15 kHz and a BWP with a subcarrier spacing of 30 kHz to the terminal. The terminal can switch to different BWPs for signal transmission based on different scenarios and service requirements. When the terminal supports a plurality of BWPs, numerologies corresponding to different BWPs may be the same or may be different.

The subcarrier spacing may be an integer greater than or equal to 0. For example, the subcarrier spacing may be 15 kHz, 30 kHz, 60 kHz, 120 kHz, 240 kHz, 480 kHz, or the like. The subcarrier spacing is a value of a spacing between central positions or peak positions of two adjacent subcarriers in frequency domain in an orthogonal frequency division multiplexing (orthogonal frequency division multiplexing, OFDM) system. For example, a subcarrier spacing in an LTE system is 15 kHz, and a subcarrier spacing in the NR system may be 15 kHz, 30 kHz, 60 kHz, 120 kHz, or the like.

In the embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (which is also referred to as a main memory). The operating system may be any one or more computer operating systems that implement service processing through a process (process), for example, a Linux operating system, a Unix operating system, an Android operating system, an iOS operating system, or a windows operating system. The application layer includes applications such as a browser, an address book, word processing software, and instant communication software. In addition, a specific structure of an execution body of a method provided in the embodiments of this application is not specifically limited in the embodiments of this application, provided that a program that records code for the method provided in the embodiments of this application can be run to perform communication according to the method provided in the embodiments of this application. For example, the method provided in the embodiments of this application may be performed by a terminal device, a network device, or a functional module that is in a terminal device or a network device and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but are not limited to a radio channel and various other media that can store, include, and/or carry instructions and/or data.

Optionally, the wireless communication system shown in FIG. 1 or FIG. 2 may further include another network entity such as a network controller or a mobility management entity. This is not limited in the embodiments of this application. The industrial internet is used as an example, and a periodicity may be represented by using a cycle time (cycle time, CT). One of typical service models in the industrial internet is a periodic and deterministic service, for example, a motion control (motion control) service. The service model arrives by using a CT as a cycle, and the service is a real-time service and has a requirement on high reliability and a low latency. The cycle time may also be understood as a transmission periodicity or a cycle periodicity. The CT value is generally 0.25 ms, 0.5 ms, 1 ms, or 2 ms. The values are usually integer multiples of 60 kHz slot duration (the 60 kHz slot duration is 0.25 ms). For example, for a service whose CT is 2 ms, based on at least one possibility of every 2 ms, every eight 60 kHz slots, every four 30 kHz slots, or every two 15 kHz slots, a controller generates one data packet (a control instruction) and sends the data packet to the executor. In addition, for a closed-loop control application, closed-loop control needs to be completed once in the CT, that is, the controller needs to successfully transmit the control instruction to an executor in the CT, and a sensor needs to perceive, in the CT, new data (for example, new position information after movement) that is obtained after the executor executes the instruction, and feed back the new data to the controller, so that the controller processes the feedback new data in the CT and generates a control instruction of a next CT. For example, it is assumed that for a closed-loop control application with a CT of 2 ms, at the moment of 0 ms, the controller generates a data packet (a control instruction) and sends the data packet to the executor. Within 0 to 2 ms, the controller needs to ensure that the control instruction is successfully received by the executor through one or more transmissions, and ensure that the controller successfully receives new data fed back by the sensor through one or more transmissions. At the moment of 2 ms, the controller needs to generate a control instruction of a next CT and send the control instruction to the executor. Therefore, assuming that a processing time of the controller is X ms (used to analyze and process feedback data and calculate time of receiving a next control instruction), the executor needs to successfully receive the control instruction in at least (2-X) ms or earlier, and the controller needs to successfully receive, in at least (2-X) ms or earlier, the new data fed back by the sensor. Therefore, a time period from (2-X) ms to 2 ms should be a time period in which no control-type data is transmitted (because even if data is transmitted, the data cannot be processed in the CT or processing cannot be complete before a next CT starts). The foregoing process is continuously repeated in the CT of 2 ms.

In the industrial internet, the controller may also be referred to as a programmable logic controller (programmable logic controller, PLC) or a master (master) device, and the executor and the sensor may also be collectively referred to as a driven device or a slave (slave) device. The executor and the sensor may be located in one physical entity, or may be located in different physical entities. In this way, it can be learned that the CT may include a real-time service time period between the controller and the executor and a data inactive time period (data inactive time). Specifically, the data inactive time period may be a time period for processing data or executing an action by the executor, a time period for perceiving data and processing the data by the executor, or a time period for generating a command by the controller. It may be understood that duration of the data inactive time period may be a time length in which there is no data exchange between the controller and the executor, or a time length in which the controller and the executor independently perform an operation, for example, processing data or generating a command. Further, the executor perceives the data, for example, information obtained for a change in a position of the executor, and sends the data to the controller in the data inactive time period.

In an implementation based on the CT, the controller sends a command to the executor, the executor executes the command received in the current CT and executes new data, and feeds back new data to the controller in the current CT. The foregoing actions may be completed in one CT. In another implementation, the executor executes a command received in a current CT, perceives new data, and feeds back the new data to the controller in a next CT. The foregoing actions may be completed in different CTs.

The controller may be the first device in the embodiments of the present invention, and the executor and/or the sensor may be the second device in the embodiments of the present invention.

It should be noted that the industrial internet is only an example. The embodiments of the present invention may also be used in various vertical industry scenarios, for example, cellular communication, relay communication, broadcast and multicast communication, sidelink communication, an internet of vehicles scenario, an autonomous driving scenario, a smart grid, and the industrial internet.

FIG. 4 is a schematic flowchart of a transmission method according to an embodiment of this application. The method may be used in the communication system shown in FIG. 1 or FIG. 2, and may also be used in various other vertical industry scenarios. This is not limited in this embodiment of this application.

S410. A first device sends a reference signal to a second device in a first time unit.

S420. The first device transmits data and/or control signaling to or receives data and/or control signaling from the second device in a second time unit.

In the following embodiment, data is used as an example for description. The data may be understood as the control signaling; or the data may include the control signaling. The first device may be a network device in a communication system, or may be a terminal device in the foregoing communication system, or may be another node having a transmission function. Similarly, the second device may be a terminal device in a communication system. This is not limited in this embodiment of this application.

According to the transmission method in this embodiment of this application, the reference signal and the data are separately sent in different time periods, so that the data can be centrally transmitted in a period of time, thereby improving data transmission reliability. For example, in the second time unit, more time domain resources may be used to transmit the data. This helps reduce time for data transmission, thereby reducing a transmission latency. In addition, this helps reduce time required for data retransmission and obtain more times of retransmissions, so that the data transmission reliability is improved. For example, in the industrial internet, transmission resources for scheduling the foregoing data in a real-time service time period may be further increased.

In this embodiment of the present invention, the reference signal may be used by the second device to obtain or send the data. For example, during communication between a terminal and a base station, when the reference signal is used for uplink transmission, the terminal may send data to the base station; or when the reference signal is used for downlink transmission, the base station may send data to the terminal. For another example, during communication between a first terminal and a second terminal, the first terminal may send data to the second terminal or receive data from the second terminal based on the reference signal.

Optionally, the first time unit and the second time unit do not overlap in time domain. For example, non-overlapping may be understood as that the first time unit and the second time unit each include several different symbols, or there is no same symbol in the first time unit and the second time unit. For example, the first time unit and the second time unit may be at different positions in one slot. Alternatively, the first time unit and the second time unit may be in different slots. In this case, data transmission and reference signal transmission may be fully separated in time domain, thereby avoiding interference caused by the reference signal to the data, and improving data transmission reliability. The industrial internet is used as an example. The first time unit in which the reference signal is located is in the data inactive time of the CT, and the second time unit in which the data is located is in the real-time service transmission time period of the CT, so that more time-frequency resources are used for data transmission. Otherwise, if design is performed based on the conventional technology, a part of resources need to be used for reference signal transmission in the real-time service transmission time period of the CT, resulting in a relatively small quantity of resources used for data transmission.

Optionally, the first time unit and the second time unit may be associated with a cycle time (cyclic time, CT). Two possibilities are listed below.

In a possible implementation, the cycle time includes the first time unit and the second time unit, the first time unit is before the second time unit, the reference signal is transmitted in the first time unit, and the data is transmitted in the second time unit. The data herein includes uplink data and/or downlink data. It may be understood that the data may also be understood as control signaling or the data may include control signaling. Details are not described herein again.

Further, if the cycle time is one CT, data used for a downlink service and/or data used for an uplink service may be arrived at the beginning of the CT, and the uplink data and/or the downlink data of the service lasts for a period of time in the CT, where the period of time is a real-time service time period, and the receiving of the data of the service needs to be highly reliable. A next period of time in the CT is a service inactive time period, and is used for transmitting the reference signal in this embodiment of this application. Another next period of time in the CT is for transmission of the uplink data and/or the downlink data of the service. Therefore, duration in the CT for transmitting the reference signal may correspond to the first time unit, and next duration in the CT for transmitting the data may correspond to the second time unit.

In another possible implementation, if the cycle time is two CTs, the first CT includes the first time unit, and the second CT includes the second time unit. The first time unit is before the second time unit. In this case, the reference signal is transmitted in the first time unit, and data of a downlink service and/or data of an uplink service are/is transmitted in the second time unit.

In this embodiment of this application, for example, in the industrial internet, that the data is transmitted in the second time unit may mean that the data is transmitted only in the second time unit in the cycle time. It may be understood that a transmission behavior of the data beyond the cycle time is not limited in this embodiment of this application. In other words, the data may be transmitted in a time unit beyond the cycle time. In other words, for one or more cycle times in time domain, the data is transmitted in the second time unit in the one or more cycle times, and for another time unit other than the one or more cycle times, the data may be transmitted in the another time unit, or may not be transmitted in the another time unit. This is not limited in this embodiment of this application.

Similarly, in this embodiment of this application, that the reference signal is transmitted in the first time unit may mean that the data is transmitted only in the first time unit in the cycle time. It may be understood that a transmission behavior of the reference signal beyond the cycle time is not limited in this embodiment of this application. In other words, the reference signal may be transmitted in a time unit beyond the cycle time. In other words, for one or more cycle times in time domain, the reference signal is transmitted in the first time unit in the one or more cycle times, and for another time unit other than the one or more cycle times, the reference signal may be transmitted in the another time unit, or may not be transmitted in the another time unit. This is not limited in this embodiment of this application. The data may be a service that has a feature or requirement, for example, an enhanced mobile broadband (enhance mobile broadband, eMBB) service, an ultra-reliable low-latency communication (ultra reliable low latency communication, URLLC) service, or a massive machine type communications (massive machine type of communication, mMTC) service. The eMBB service has a feature or requirement of a large data volume, the URLLC service has a feature or requirement of high reliability, and the mMTC service has a feature or requirement of wide coverage.

In this embodiment of the present invention, the second time unit may include scheduling resources of a control channel and a shared channel. Alternatively, the second time unit may be mapped to a scheduling resource.

In this embodiment of the present invention, for example, a length of one frame may be defined as 10 ms, one frame may include 10 subframes, and a length of one subframe may be defined as 1 ms. One subframe may include several slots, and one slot may include 14 symbols (which may be referred to as slots) or 12 symbols. A slot including 12 symbols may also be referred to as a mini-slot (mini-slot) or a non-slot (non-slot). A network device may send control signaling to a terminal based on a slot-based or symbol-based control channel, or schedule, based on a slot-based or symbol-based shared channel, the terminal device to receive and send data. In addition, the network device may alternatively define and configure, based on a slot or a symbol, parameters such as a reference signal, a slot format, and a subcarrier spacing.

A PDSCH is used as an example. Different PDSCHs may occupy different quantities of symbols in time domain. For example, in a data transmission process, non-slot-based scheduling is performed for data carried on a PDSCH, and a minimum quantity of scheduling symbols in one data transmission may be two, four, or seven. In this way, the PDSCH occupies two, four, or seven symbols in time domain. Alternatively, slot-based scheduling is performed for data carried on a PDSCH, and a minimum quantity of scheduling symbols in one data transmission may be 14. In this way, the PDSCH occupies 14 symbols in time domain. It may be understood that the quantity of symbols occupied by the PDSCH in time domain is merely an example, and a specific quantity of symbols occupied by the PDSCH in time domain is not limited in this embodiment of this application. Similarly, it may be learned that a control channel such as a PDCCH or a PSCCH and another shared channel such as a PUSCH or a PSSCH may occupy different quantities of symbols in time domain. This is not limited in the present invention.

In this embodiment of this application, the scheduling resource of the data may be understood as a resource allocated to a transmit end, and the transmit end sends the data to a receive end by using the scheduling resource. The following uses a PDCCH and a PDSCH as examples for description. A case of a PDCCH and a PUSCH or a case of a PSSCH and a PSCCH is similar. A difference lies in that time domain reference positions of reference signals on channels and/or relative position values of reference signals on channels relative to the time domain reference positions are different. Details are not described herein again.

Specifically, data sent by the transmit end to the receive end may be referred to as downlink data, and the downlink scheduling such as downlink control information (downlink control information, DCI) may be sent by the transmit end to the receive end through a physical downlink control channel (physical downlink control channel, PDCCH). Specifically, if the transmit end sends the DCI to the receive end in a time unit n through the PDCCH, a time unit corresponding to data that is scheduled by using the DCI and that is transmitted on a physical downlink shared channel (physical downlink share channel, PDSCH) is n+K0. K0 can be understood as timing between downlink assignment and corresponding downlink data transmission (Timing between DL assignment and corresponding DL data transmission). For ease of description, a time unit related to K0 is collectively referred to as a slot below. However, the time unit described in the embodiments of the present invention is not limited to a slot. Generally, the transmit end may configure a time domain resource allocation table, or referred to as a PDSCH-symbolAllocation table (as shown in Table 2). Each row in the time domain resource allocation table may include one or more of K0, time domain resource allocation information, and a scheduling type (or referred to as a PDSCH mapping type). The time domain resource allocation information may indicate a time domain resource, for example, indicate a start symbol and a quantity of symbols that are occupied by scheduled data, or indicate a time unit occupied by downlink data. For example, the time domain resource allocation information may be jointly encoded as a start and length indicator value (start length indication value, SLIV).

The scheduling type A indicates slot transmission, and the scheduling type B indicates non-slot transmission or mini-slot transmission.

Generally, reference information of a time domain position of a reference signal has the following two cases:
The mapping mode A is also referred to as a mapping mode under slot scheduling, and a DMRS may be located in the second symbol, the third symbol, or another symbol of a slot for PDSCH transmission. In this case, a reference position of the time domain position of the reference signal, for example, a reference start point, is a start symbol of the slot in which PDSCH transmission is performed.
The mapping mode B is also referred to as a mapping mode under mini-slot scheduling, and a DMRS may be located in the symbol 0 on which a PDSCH resource is scheduled. In this case, a reference position of the time domain position of the reference signal, for example, a reference start point, is a start symbol of an allocated PDSCH transmission time domain resource. For example, if a scheduling resource allocated by a base station to a terminal is located on the seventh and the eighth symbols in a slot, the seventh symbol in the slot is the reference start point of the time domain position of the DMRS.

In addition, the transmit end may indicate, by using the DCI, a row in the time domain resource table corresponding to the time domain resource that is allocated by the receive end and that is used for data transmission, so that the receive end can learn of a value of K0 and the time domain resource that is allocated by the transmit end and that is used for data transmission. When the transmit end is a base station, and the receive end is a terminal, the base station may send the time domain resource allocation table to the terminal by using radio resource control (radio resource control, RRC) signaling. In addition, a value set may be further configured for K0, and K0 does not need to be placed in the time domain resource allocation table.

**Table 2**

| Index index | K0 | Start symbol | Quantity of symbols | Scheduling type (PDSCH mapping type) |
|---|---|---|---|---|
| 0 | 0 | 2 | 10 | A |
| 1 | 1 | 3 | 8 | A |
| 2 | 0 | 4 | 7 | B |
| 3 | 3 | 2 | 10 | A |

The PDCCH may also be referred to as a PDCCH monitoring occasion (monitor occasion), and is used to transmit control signaling. The base station needs to notify the terminal of how to monitor the PDCCH, for example, position information of the PDCCH. Generally, the base station may configure, for the terminal by using RRC signaling, a PDCCH monitoring periodicity, a PDCCH monitoring offset (offset), and a PDCCH monitoring pattern (pattern, or a monitoring symbol) that is in one slot. For example, the monitoring periodicity configured by the base station for the terminal is four slots, the monitoring offset is two slots, and the pattern is symbols 0 and 1. In this case, the terminal uses a slot 2 as an offset, and monitors and determines, in every four slots, whether there is a PDCCH, and learns that the PDCCH is located in a slot 2, slot 6, slot 10, slot 14, ..., and slot 2+4n, where n is an integer, and the symbols 0 and 1 are monitored in the foregoing slots.

The PDSCH may also be referred to as a PDSCH occasion (PDSCH occasion), and is used to transmit downlink data. As shown in Table 3, for example, a value of K0 in the time domain resource allocation table is 0, indicating that the PDSCH and the PDCCH are in a same slot. For example, if one slot includes 14 symbols, based on the scheduling type B, that is, one or more PDSCHs may be scheduled in one slot, the terminal learns that there are four PDSCH positions that are in one slot and that can be used by the base station to send downlink data to the terminal, and the four positions are specifically symbols 0 and 1, symbols 4 and 5, symbols 8 and 9, and symbols 12 and 13.

**Table 3**

| Index index | K0 | Start symbol | Quantity of symbols | Scheduling type (PDSCH mapping type) |
|---|---|---|---|---|
| 0 | 0 | 0 | 2 | B |
| 1 | 0 | 4 | 2 | B |
| 2 | 0 | 8 | 2 | B |
| 3 | 0 | 12 | 2 | B |

In an optional embodiment, the method further includes: The first device sends reference signal information to the second device, where the reference signal information indicates a reference position of the reference signal in the first time unit. The reference signal may be a data demodulation reference signal (DMRS), that is, a reference signal used for data demodulation to perform channel estimation. The following uses a DMRS as an example for description. It may be understood that another reference signal may also have a relative position relationship with a time unit.

In an optional embodiment, the reference signal includes at least one of the following: a demodulation reference signal (demodulation reference signal, DMRS), a sounding reference signal (sounding reference signal, SRS), a signal carried on a physical random access channel (physical random access channel, PRACH), a synchronization signal, a phase tracking reference signal (phase-tracking reference signals, PTRS), or a channel state information-reference signal (channel state information-reference signal, CSI-RS).

There may be a plurality of possible combinations of the foregoing physical signals. For example, the signals included in the physical signals may be the DMRS, the SRS, the signal carried on the PRACH, the synchronization signal, the PTRS, and the CSI-RS. In this way, in a possible implementation, the reference signal is transmitted in the first time unit, and the second time unit is used to transmit the data, so that time domain resources used to transmit the data can be increased. In another possible implementation, the second time unit is used to transmit the data and some DMRSs used for data demodulation, so that time domain resources used to transmit the data can also be increased. For another example, the SRS, the signal carried on the PRACH, the synchronization signal, the PTRS, or the CSI-RS is transmitted in the second time unit, and all DMRSs used for data demodulation are transmitted in the first time unit. In this way, demodulation performance of service data in the second time unit can be better ensured.

In a possible implementation, uplink symbols in the first time unit may be used to transmit an uplink DMRS, an SRS, an uplink PTRS, and a signal carried on a PRACH, and downlink symbols in the first time unit may be used to transmit a downlink DMRS, a synchronization signal, a downlink PTRS, a CSI-RS, and the like.

The uplink DMRS may be used for uplink data demodulation in one or more predefined or preconfigured cycle times. In other words, a cycle time corresponding to uplink data that can be demodulated by using the uplink DMRS in the second time unit of a current cycle time may be configured through predefinition or preconfiguration. For example, if the one or more predefined or preconfigured cycle times are a current cycle time, the uplink DMRS may be used for uplink data demodulation in the current cycle time. For another example, if the one or more predefined or preconfigured cycle times are a previous cycle time of the current cycle time, the uplink DMRS may be used for uplink data demodulation in the previous cycle time. For still another example, if the one or more predefined or preconfigured cycle times are a next cycle time of the current cycle time, the uplink DMRS may be used for uplink data demodulation in the next cycle time. For still another example, if the one or more predefined or preconfigured cycle times are a current cycle time and a next cycle time of the current cycle time, the uplink DMRS may be used for uplink data demodulation in the current cycle time and uplink data demodulation in the next cycle time.

Similarly, the downlink DMRS may be used for downlink data demodulation in one or more predefined or preconfigured cycle times. In other words, a cycle time corresponding to downlink data that can be demodulated by using the downlink DMRS in the second time unit of a current cycle time may be configured through predefinition or preconfiguration. A case of the downlink DMRS is similar to the case of the uplink DMRS, and details are not described herein again.

Generally, optionally, during unicast data transmission, DMRSs received by different second devices occupy at least one of different time domain resources, frequency domain resources, code domain resources, and space domain resources.

In an optional embodiment, when there are a plurality of second devices that can transmit data with the first device in the system, and transmission channels between the plurality of second devices and the first device are correlated to some extent, the plurality of second devices may use a same DMRS. In this case, the first node may send a group-specific DMRS, so that the plurality of second nodes demodulate the received data.

In an optional embodiment, the group-specific DMRS may be transmitted in the first time unit, or some of the DMRSs may be transmitted in the first time unit and the other DMRSs are transmitted in the second time unit. This is not limited in this embodiment of this application. The same DMRS represents a same DMRS (that is, a group-specific DMRS), and it may also be understood that a same resource is used to send DMRSs. The resource may include at least one of a time domain resource, a frequency domain resource, a code domain resource, a space domain resource, and the like.

The correlation between the channels may be understood as that channel states are similar. For example, when a distance between two first nodes is less than a threshold, it may be considered that the channels between the two first nodes and the second node are correlated, and a same DMRS may be used. The threshold may be predefined or preconfigured. It should be understood that the channel correlation may be alternatively reflected as another feature. This is not limited in this embodiment of this application.

Optionally, in a cycle time, if the DMRS in the reference signal needs to be used to demodulate the data, a position of the DMRS in the first time unit may depend on a relative position relationship between the first time unit and the second time unit. In other words, the first device may configure the position of the DMRS in the first time unit based on the relative position relationship between the first time unit and the second time unit. For example, in a cycle time, if the first time unit is before the second time unit, the DMRS may be configured at the start of the first time unit. If the first time unit is after the second time unit, the DMRS may be configured at the end of the first time unit. If the second time unit is located between two first time units, the DMRS may be configured at the end of a next first time unit. In this way, the second device can obtain the DMRS more quickly, and demodulate the data by using the DMRS, thereby improving data transmission efficiency.

Optionally, the reference signal information includes reference information of a time domain position of the reference signal.

The mapping mode A and the mapping mode B described above limit tight coupling between position information of a reference signal and position information of a PDSCH. To be specific, the reference signal and the PDSCH are in a same slot, a same mini-slot, or a same scheduling resource. To improve data transmission reliability and flexibility, in this embodiment, the reference signal information may be used to indicate reference start point information of a time domain position of a reference signal. For example, in the industrial internet, the reference information indicating the time domain position of the reference signal may use a service feature of the CT.

Optionally, the reference signal information includes a start position of the first time unit; or the reference signal information includes a start position and an offset value of the first time unit, where the offset value is a time length relative to the start position.

Specifically, the reference signal information may be information such as a periodicity and/or an offset value. For example, the reference signal information may be information such as one periodicity (for example, the periodicity is four slots) and one offset value (for example, the offset value is one slot and two symbols). In this case, a reference start point of the time domain position of the reference signal is the second symbol in a slot 1, or the second symbol in a slot 1+4, or the second symbol in a slot 1+4+4, ..., and so on. Assuming that the time domain position of the reference signal is a position of the third symbol of the time domain reference start point relative to the reference signal, for a PDSCH 1 transmitted in a slot 2, a DMRS of the PDSCH 1 is located in the fifth symbol in a slot 1 (where the reference start point of the time domain position of the reference signal is the second symbol in the slot 1 plus three symbol values relative to the start point). For a PDSCH 2 transmitted in a slot 3, a DMRS of the PDSCH 2 is located in the fifth symbol in a slot 1 (where the reference start point of the time domain position of the reference signal is the second symbol in the slot 1 plus three symbol values relative to the start point). For a PDSCH 3 transmitted in a slot 7, a DMRS of the PDSCH 3 is located in the fifth symbol in a slot 5 (where the reference start point of the time domain position of the reference signal is the second symbol in the slot 5 plus three symbol values relative to the start point). It can be learned from the foregoing example that DMRSs of the PDSCH 1 and the PDSCH 2 in the slot 2 and the slot 3 are located in the slot 1. In this way, decoupling between the PDSCH and the DMRS is implemented. Therefore, more resources in the slot 2 and the slot 3 can be used to transmit data. Optionally, in the communication system in this embodiment of this application, the PDSCH and the DMRS may not be decoupled. For example, in the industrial internet, if the slot 1 includes a data inactive time period (free time or data inactive time), a PDSCH is not scheduled in the data inactive time period. If the slot 1 has a real-time service time period, the slot 1 may include a PDSCH and a DMRS, that is, the PDSCH in the slot 1 may be scheduled by using the DMRS that is also located in the slot 1. For example, the first time unit includes several slots, and the start position is the first slot in the first time unit or the first symbol in the first slot in the first time unit. If the start position is the first slot, the offset value is a time length that is between the first slot and several slots and that is located in the first time unit. If the start position is the first symbol, the offset value is a time length that is between the first symbol and several symbols and that is located in the first time unit.

Optionally, the first device may use at least one of radio resource control (radio resource control, RRC) signaling, media access control control element (media access control control element, MAC CE) signaling, or downlink control information (downlink control information, DCI) to indicate the reference signal information.

In an optional embodiment, the method further includes: The first device sends a radio resource control RRC message to the second device, where the RRC message includes the reference signal information.

For example, the RRC message may include a reference periodicity and offset (ReferencePeriodicityAndOffset) parameter, used to configure a periodicity. Further, the parameter may be further used to configure an offset value (offset). For example, the reference signal information may be information such as one periodicity (for example, the periodicity is eight slots) and one offset value (for example, the offset value is two slots and 0 symbol). In this case, a reference start point of the time domain position of the reference signal is the symbol 0 in a slot 2, or the symbol 0 in a slot 2+8, or the symbol 0 in a slot 2+8+8, ..., and so on. A communication device may learn of the time domain position of the reference signal with reference to a "relative position relative to the time domain reference start point of the reference signal". For example, assuming that the relative position relative to the time domain reference start point of the reference signal is two symbols, the communication device may learn that the time domain position of the reference signal is the second symbol in the slot 2, the second symbol in the slot 2+8, or the second symbol in slot 2+8+8. For a scheduled PDSCH, the communication device may optionally perform channel estimation based on a latest DMRS. For example, for a scheduled PDSCH to be transmitted in a slot 3, a DMRS in the second symbol in the slot 2 may be used to perform channel estimation. Certainly, the PDSCH may also perform channel estimation by using a DMRS located in a same slot. In a possible implementation, one CT is used as an example. The parameter is used to configure a reference position of a reference signal that uses every several slots as a periodicity in the CT. Optionally, the offset may be further used to determine a symbol or a slot in the several slots as the reference position. For example, when the offset is 0, in the CT, every several slots are used as a periodicity, and a start position of the several slots is used as the foregoing reference position.

In an optional embodiment, the method further includes: The first device sends a downlink control indicator DCI to the second device, where the DCI is used to indicate the reference position of the reference signal in the first time unit. A format of the DCI and each field in the DCI are not limited in this embodiment of the present invention. For example, the DCI format may be an existing DCI format, or may be a newly designed DCI format. The DCI format may be a DCI format for scheduling data transmission (for example, in a 5G NR system, DCI formats 1_0, 1_1, 0_0, and 0_1 are used for scheduling a PDSCH/PUSCH), or may be a DCI format for indicating DMRS transmission. For example, if the existing DCI format is reused, in the NR system, DCI formats 1_0, 1_1, 0 0, and 0_1 are used for scheduling a PDSCH and/or a PUSCH, and a DCI format 2 is used for transmitting slot format information, preemption indication information, power control information, and the like. For sidelink communication, there may also be another DCI format. One of the foregoing formats is reused. For example, the DCI format 1_0 is reused, a field (for example, a resource allocation field) in the DCI format 1_0 is used as time domain reference information for indicating a reference signal, and other fields are padded with 0 or 1 by default. In this way, a size of the DCI is the same as that of the DCI 1_0, thereby avoiding increasing overheads of blind DCI detection by a user. In another implementation, the newly designed DCI format is used to indicate DMRS transmission (time domain reference information of a reference signal). There is a dedicated field indicating the time domain reference information of the reference signal, and then 0 or 1 is padded to ensure that the time domain reference information is aligned with a quantity of bits in one of the foregoing formats. In this way, it can be ensured that no new DCI size is introduced, thereby avoiding increasing overheads of blind DCI detection by a user.

Generally, when the first device sends a first DCI to the second device, the reference position may be explicitly or implicitly indicated.

Optionally, for example, if the reference position is implicitly indicated, the first device sends the first downlink control indicator DCI to the second device on a plurality of symbols, and a time domain reference start point position of the reference signal is any one of the following:
a start position of a slot that carries the DCI, a start symbol of the plurality of symbols, or an end symbol of the plurality of symbols.

Specifically, the first device may send the first DCI to the second device on the plurality of symbols, or the second device may receive, on the plurality of symbols, the first DCI sent by the first device. In this case, there is a mapping relationship between the plurality of symbols and the reference position of the reference signal in the first time unit. For example, when the first time unit is one slot, the second device may learn, based on the mapping relationship, that the reference position is a start position of the slot, or a start position or an end position of the plurality of symbols. For another example, when the first time unit is a plurality of slots, similarly, the second device may learn, based on the mapping relationship, that the reference position is a start position of one of the plurality of slots, or a start position or an end position of the plurality of symbols.

Optionally, for example, if the reference position is explicitly indicated, the following specifically describes content included in the DCI in this application.

The first DCI may include a first indicator field, and the first indicator field is used to indicate the reference position of the reference signal in the first time unit. In this way, the second device may determine the reference position based on the first indicator field. It should be noted that the second device may determine the reference position based on the first DCI in a plurality of manners, and this is merely a possible determining manner herein.

In this embodiment of the present invention, a frequency domain position corresponding to a DMRS may be predefined in an entire BWP or a resource pool (resource pool, RP), or may be configured in the BWP or the RP by using higher layer signaling, or may be indicated by using physical layer signaling. This is not limited in the present invention. In this embodiment of the present invention, information about the "relative position relative to the time domain reference start point of the reference signal" is not limited either, and may be predefined or indicated by signaling, and a value may be 0, 2, 3, 8, or the like.

Further, for the first indicator field, in a possible implementation, for a scenario in which the first device may allocate a resource to the second device within a bandwidth range of a BWP or an RP, the first indicator field may be used to indicate a reference position corresponding to the BWP or the RP, and the second device may receive, based on the reference position that corresponds to the BWP or the RP and that is indicated by the first indicator field, a pilot signal sent by the first device in the first time unit.

Specifically, a correspondence between the reference position and the BWP/RP may be preset, or the first device configures a correspondence in advance and sends the correspondence to the second device. In this way, after receiving the DCI, the second device may obtain the first indicator field through parsing, and further determine, based on the correspondence, the reference position corresponding to the BWP or the RP.

The following lists a possible DMRS configuration manner. A DMRS of a PDSCH is used as an example. In Table 4, relative position values of DMRSs in different quantities of symbols occupied by the PDSCH relative to a time domain reference start point are defined. Note: Table 4 is merely a schematic table of a "relative position value relative to the time domain reference start point of the reference signal". In a specific implementation process, values in Table 4 may be modified, or may be reflected as different configuration values. The PDSCH may also be referred to as a PDSCH occasion (PDSCH occasion). As shown in Table 4, for example, one slot includes 12 symbols (for example, in a configuration of an extended CP) or 14 symbols (for example, in a configuration of a normal CP), based on the scheduling type A or the scheduling type B, one or more PDSCHs may be scheduled in one slot. In Table 4, for the scheduling type A, a variable *l*₀ is equal to 2 or 3; and for the scheduling type B, a variable *l*₀ is equal to 0.

A case in which "a time domain reference start point of a reference signal is a start symbol of a slot in which PDSCH transmission is performed" is used as an example. If a scheduled PDSCH is transmitted in a slot 2, a quantity of PDSCH symbols is 14 (that is, symbols 0 to 13 in the slot 2), a scheduling type for the PDSCH is the scheduling type A, *l*₀ =2, and a configuration parameter is 1, relative position values of a DMRS relative to a time domain reference start point are 2 and 8 by querying Table 4. Therefore, finally obtained absolute time domain positions of the DMRS are a symbol 2 and a symbol 8 in the slot 2, that is, the DMRS is transmitted on the symbol 2 and the symbol 8 in the slot 2.

A case in which "a time domain reference start point of a reference signal is a start symbol of an allocated PDSCH transmission resource" is used as an example. If a scheduled PDSCH is transmitted on symbols 4 to 10 in a slot 3 (that is, a quantity of symbols of the PDSCH is 6), a scheduling type for the PDSCH is the scheduling type B, *l*₀ =0, and a configuration parameter is 0, a relative position value of a DMRS relative to a time domain reference start point is 0 by querying Table 4. Therefore, a finally obtained absolute time domain position of the DMRS is a symbol 4 in the slot 3, that is, the DMRS is transmitted on the symbol 4 in the slot 3.

A case in which "time domain reference start point information of the reference signal is a periodicity of four slots, an offset value of one slot, and length information of 0 symbol" is used as an example. If a scheduled PDSCH is transmitted on symbols 7 to 14 in a slot 6 (that is, a quantity of symbols of the PDSCH is 7), a scheduling type for the PDSCH is the scheduling type B, *l*₀ =0, and a configuration parameter is 0, a relative position value of a DMRS relative to a time domain reference start point is 0 by querying Table 4. Therefore, a finally obtained absolute time domain position of the DMRS is a symbol 0+0 in a slot 1+4, that is, the DMRS is transmitted on the symbol 0 in a slot 5.

A case in which "time domain reference start point information of the reference signal is the symbol 0 in a slot in which a first DCI format is located" is used as an example. If the first DCI is detected in a slot 6, and the scheduled PDSCH is transmitted on symbols 3 to 13 in the slot 6 (that is, a quantity of PDSCH symbols is 10), a scheduling type for the PDSCH is the scheduling type A, *l*₀ =2, and a configuration parameter is 1, relative position values of a DMRS relative to a time domain reference start point are 2 and 8 by querying Table 4. Therefore, finally obtained absolute time domain positions of the DMRS are a symbol 2 and a symbol 8 in the slot 6, that is, the DMRS is transmitted on the symbol 2 and the symbol 8 in the slot 6.

**Table 4**

| Quantity of symbols that can be occupied by PDSCH for scheduling resources | Symbol position of a DM-RS in a PDSCH | | | | | |
|---|---|---|---|---|---|---|
| | Scheduling type A | | | Scheduling type B | | |
| | Configuration parameter=0 | Configuration parameter=1 | Configuration parameter=2 | Configuration parameter=0 | Configuration parameter=1 | Configuratio n parameter=2 |
| <4 | | | | - | - | |
| 4 | *l*₀ | *l*₀ | | - | - | |
| 5 | *l*₀ | *l*₀ | | - | - | |
| 6 | *l*₀ | *l*₀ | | *l*₀ | *l*₀ | |
| 7 | *l*₀ | *l*₀ | | *l*₀ | *l*₀ | |
| 8 | *l*₀ | *l*₀ | | - | - | |
| 9 | *l*₀ | *l*₀ | | - | - | |
| 10 | *l*₀ | *l*₀, 8 | | - | - | |
| 11 | *l*₀ | *l*₀, 8 | | - | - | |
| 12 | *l*₀ | *l*₀, 8 | | - | - | |
| 13 | *l*₀ | *l*₀, 10 | | - | - | |
| 14 | *l*₀ | *l*₀, 10 | | - | - | |

Optionally, the first device sends the reference signal information to the second device, where the reference signal information includes time domain reference start point information of the reference signal. In another implementation method, the reference start point information of the reference signal sent by the first device to the second device is predefined. For example, the reference start point information is predefined as a symbol 0 in a slot in which data transmission is located, the first symbol of an allocated time domain resource for data transmission, a symbol 0 of a slot in which a mapping type A is located, or the first symbol of an allocated time domain resource for data transmission for the mapping type B. The first device sends the reference signal information to the second device, where the reference signal information includes relative position information relative to the time domain reference start point of the reference signal. The relative position information may no longer be a value in Table 4, and may be a negative value. For example, if the relative position information is a negative one slot, if the PDSCH is transmitted in a slot 3, a reference signal corresponding to the relative position information is transmitted in a slot 2. The relative position information may be reference information that is closest to the PDSCH start symbol and that is before the PDSCH start symbol. For example, if the reference signal has a periodicity of four slots and an offset of 0 slot and 0 symbol, if the PDSCH is transmitted in the slot 3, a corresponding reference signal is transmitted on a symbol 0 in a slot 0.

Based on the foregoing DMRS configuration manner, the time domain reference start point information of the DMRS is flexibly configured, so that the first device may send the DMRS to the second device in a periodicity of one or more slots or mini-slots. In addition, decoupling between the DMRS and data transmission can be implemented. Based on a service model feature and a channel environment feature, a compromise between channel estimation and DMRS overheads can be achieved, so that resource utilization can be maximized. This is applicable to eMBB transmission, and is also applicable to URLLC transmission.

Based on the foregoing consideration, the method in this embodiment of the present invention further includes: The first device sends indication information to the second device, to indicate the second device to disable the reference signal in a scheduling resource.

It may be understood that, there is no necessary sequence in terms of time sequence or logic in the steps described above, for example, a step in which a first device sends a reference signal to a second device in a first time unit, a step in which the first device transmits data to or receives data from the second device in a second time unit, and a step in which the first device sends indication information to the second device, to indicate the second device to disable the reference signal in a scheduling resource. Specifically, the first device may send the indication information before or after the first device sends the reference signal and/or the first device transmits or receives the data. The first device may send the reference signal before or after the first device transmits or receives the data.

In this embodiment of the present invention, the scheduling resource may be a scheduling resource corresponding to the second time unit. Specifically, for example, in Table 4, the first device indicates the second device to disable the DMRS on the PDSCH. In an example, the indication information may be implemented by using a new-type transmission (NewTypeTrans) parameter in a higher layer message. It may be understood that the disabling action is also applicable to another channel such as a PDCCH, a PUSCH, a PSSCH, a PSCCH, or a DMRS corresponding to a channel.

For example, the indication information may indicate the second device to ignore or discard a reference signal on a control channel and/or a shared channel; or after receiving the indication information, the second device ignores or discards the reference signal. In this case, the reference signal is disabled, so that data can be centrally transmitted in a period of time, and no reference signal needs to be transmitted or a small quantity of reference signals need to be transmitted. In this way, transmission resources for scheduling the data in a real-time service time period are increased as much as possible, thereby improving data transmission reliability. For example, in the second time unit, more time domain resources may be used to transmit the data. This helps reduce time for data transmission, thereby reducing a transmission latency. In addition, this helps reduce time required for data retransmission and obtain more times of retransmissions, so that the data transmission reliability is improved.

There may be a plurality of specific implementations in which the first device indicates the second device to disable the reference signal in the scheduling resource.

In a possible implementation, the first device sends the indication information to the second device, to indicate the second device to disable at least one reference signal in the scheduling resource, and the second device disables one, more, or all reference signals in the scheduling resource according to the indication, where the indication information may include an identifier of the at least one reference signal.

For example, the reference signals in the scheduling resource include different types of reference signals. If the indication includes an identifier of an uplink DMRS, the second device disables all uplink DMRSs at the same time. Alternatively, if the indication includes an identifier of a downlink DMRS, the second device disables all downlink DRMSs at the same time.

It should be noted that the identifier of the reference signal included in the indication information may be an index of the reference signal in the scheduling resource. For example, if the reference signals in the scheduling resource include an uplink DMRS and a downlink DMRS, one bit may be used to indicate an index of the DMRS. For example, "0" indicates an index of the uplink DMRS, and "1" indicates an index of the downlink DRMS. In this manner, a quantity of bits carried in the indication information can be reduced, and transmission load can be reduced.

As an example, cases in which "a time domain reference start point of a reference signal is a start symbol of a slot in which PDSCH transmission is performed" and "relative position values of a reference signal relative to a time domain reference start point are shown in Table 4" are used as examples. Before the first device does not send the indication information (for example, first RRC signaling) to the second device, if a scheduled PDSCH is transmitted on symbols 0 to 13 in a slot 3 (that is, a quantity of symbols of the PDSCH is 14), a scheduling type for the PDSCH is the scheduling type A, *l*₀ =2, and a configuration parameter is 1, relative position values of a DMRS relative to a time domain reference start point are 2 and 10 by querying Table 4. Therefore, finally obtained absolute time domain positions of the DMRS are a symbol 2 and a symbol 10 in the slot 3, that is, the DMRS is transmitted on the symbol 2 and the symbol 10 in the slot 3. After the first device sends the indication information (for example, first RRC signaling indicating to disable DMRS transmission) to the second device, if a scheduled PDSCH is transmitted on symbols 0 to 13 in a slot 3 (that is, a quantity of symbols of the PDSCH is 14), a scheduling type for the PDSCH is the scheduling type A, *l*₀ =2, and a configuration parameter is 1, the DMRS is not transmitted on the symbols 2 and 10 in the slot 3. Therefore, Table 4 may be modified to Table 5 (Note: Table 4 and Table 5 may be two tables, which respectively represent a case in which a first RRC parameter is configured as a first value and a case in which a first RRC parameter is configured as a second value, and Table 4 and Table 5 may also be combined into one table).

**Table 5**

| Quantity of symbols that can be occupied by PDSCH for scheduling resources | Symbol position of a DM-RS in a PDSCH. NewTypeTrans parameter is set to 1 | | | | | |
|---|---|---|---|---|---|---|
| | Scheduling type A | | | Scheduling type B | | |
| | Configuration parameter=0 | Configuration parameter=1 | Configuration parameter=2 | Configuration parameter=0 | Configuration parameter=1 | Configuratio n parameter=2 |
| <4 | - | - | - | - | - | - |
| 4 | - | - | - | - | - | - |
| 5 | - | - | - | - | - | - |
| 6 | - | - | - | - | - | - |
| 7 | - | - | - | - | - | - |
| 8 | - | - | - | - | - | |
| 9 | - | - | - | - | - | |
| 10 | - | - | - | - | - | - |
| 11 | - | - | - | - | - | |
| 12 | - | - | - | - | - | |
| 13 | - | - | - | - | - | - |
| 14 | - | - | - | - | - | - |

In this embodiment of the present invention, because the DMRS associated with the PDSCH is no longer transmitted, and the PDSCH does not have a reference signal for channel estimation, optionally, the foregoing method further includes: The first device sends reference signal information to the second device, where the reference signal information is used to indicate reference signal information required by the PDSCH for channel estimation, and the reference signal information may include a time length and/or (start) position information occupied by the reference signal in the first time unit. Optionally, the reference signal information may include a type of the reference signal. For example, the first time unit is "starting information: a periodicity of four slots and an offset value of three symbols, and length information of one symbol". In this case, a position of the reference signal is a symbol 3 in a slot 0, a symbol 3 in a slot 4, a symbol 3 in a slot 8, and so on. In this way, an effect of the foregoing embodiment can also be achieved. To be specific, a time domain position of a reference signal and a time domain position of data are decoupled, and the reference signal does not need to be located in a mini-slot or a slot in which the data is transmitted. The information may indicate that the reference signal is sent by using several symbols in the slot. For example, if the first time unit is a plurality of slots, the reference signal information may indicate that the reference signal is sent by using several slots or several symbols. In addition, the reference signal information may further indicate a slot or a symbol that is not occupied by the reference signal, to prevent the reference signal from occupying each slot, thereby improving data transmission reliability and stability.

In this embodiment of the present invention, the type of the reference signal may be a DMRS, a CSI-RS, a TRS, a PTRS, a DRS, an SRS, or a new type of the reference signal (referred to as a first-type reference signal). When the reference signal is a CSI-RS or an SRS, a receiving node performs channel estimation based on the CSI-RS or the SRS sent in the first time unit, to obtain a channel estimation result, where the channel measurement result may be used for data transmission within a predefined or preconfigured cycle time or transmission of data scheduled by using DCI/SCI (sidelink control information). For example, the channel estimation result may be used to transmit data in a current cycle time, or may be used to transmit data in n cycle times after the current cycle time, where n is an integer greater than or equal to 1.

Optionally, in an embodiment, the first device sends the reference signal information to the second device, where the reference signal information includes a time length or position information occupied by the reference signal in the first time unit. When the reference signal is any one of a CSI-RS, a TRS, a PTRS, a DRS, and an SRS, the reference signal has at least one of the following same parameters as the control channel and/or the shared channel: a precoding matrix, a QCL, and an antenna port. In this way, a receiver can perform channel estimation based on the same parameter, thereby improving data transmission reliability. Alternatively, that two antenna ports have a quasi colocation (quasi co-located QCL) relationship means that a channel large-scale parameter of one antenna port may be inferred (infer) based on a conveyed (conveyed) channel large-scale parameter of the other antenna port. The large-scale parameter may include one or more of an average gain (average gain), an average delay (average delay), a delay spread (delay spread), a Doppler frequency shift (Doppler shift), a Doppler spread (Doppler spread), and a spatial parameter (spatial parameter or spatial Rx parameters). The spatial parameter may include one or more of an angle of arrival (Angle of arrival, AOA), a dominant angle of arrival (Dominant angle of arrival, dominant AoA), an average angle of arrival (Average angle of arrival, average AoA), an angle of departure (Angle of departure, AOD), a channel correlation matrix, a power angle spread spectrum of an angle of arrival, an average angle of departure (Average angle of departure, average AoD), a power angle spread spectrum of an angle of departure, a transmit channel correlation, a receive channel correlation, transmit beamforming, receive beamforming, a spatial channel correlation, a spatial filter, a spatial filtering parameter, a spatial receiving parameter, or the like. In a multi-antenna transmission scenario, a device may adjust a weight of an antenna array, and perform spatial energy aggregation on a to-be-sent signal and a to-be-received signal, that is, perform spatial filtering on the signals. It is generally referred to as a beamforming technology (including a digital beamforming technology such as precoding). Such adjustment of the weight of the antenna array may be performed by adjusting a phase of a phase shifter and adjusting a weight of digital precoding. A formed weight array may also be referred to as a spatial filtering parameter. The antenna port includes at least one of an antenna port of a channel used for uplink data transmission (referred to as an uplink data channel for short), for example, a physical uplink shared channel PUSCH; an antenna port of a reference signal used for demodulation (referred to as a demodulation reference signal for short), such as a demodulation reference signal (demodulation reference signal, DMRS); an antenna port of a reference signal used for channel sounding (referred to as a channel sounding reference signal for short), for example, a sounding reference signal (sounding reference signal, SRS); and the like. The antenna port is an antenna port used to carry a specific physical channel and/or a physical signal. For signals sent over a same antenna port, regardless of whether the signals are sent over a same physical antenna or different physical antennas, channels corresponding to paths through which the signals pass during spatial transmission may be considered to be the same or related (for example, large-scale channel properties such as channel matrices are the same). In other words, when demodulating the signals sent over the same antenna port, a receive end may consider that the channels corresponding to the signals are the same or related. The antenna port is a logical concept. Generally, a signal receive end identifies, by using antenna ports, signals having different transmission channels.

Further, numerologies of the first time unit and the second time unit may be the same, or may be different. Therefore, for example, if the second device supports receiving of a reference signal in the first time unit and the second time unit, there are two cases:
Case 1: The second device supports receiving of the reference signal in the first time unit and the second time unit that have a same numerology, but does not support receiving of the reference signal in both the first time unit and the second time unit that have different numerologies.
Case 2: Regardless of whether the numerologies of the first time unit and the second time unit are the same, the second device supports receiving of the reference signal in the first time unit and the second time unit.

In this embodiment of this application, it may also be predefined that the second device supports receiving of the reference signal in the first time unit and the second time unit that have same numerologies.

In this embodiment of this application, the second device may further report indication information to the first device, to indicate whether the second device supports receiving of the reference signal in the first time unit and the second time unit. If the indication information indicates that the second device does not support receiving of the reference signal in the first time unit and the second time unit, there may be a plurality of possible implementations. A specific implementation in this case is not limited in this embodiment of this application. If the indication information indicates that the second device supports receiving of the reference signal in the first time unit and the second time unit, the first device may configure the scheduling resource of the reference signal in the foregoing implementation.

If the first device determines, based on the indication information, that the second device belongs to the case 1, the first device may configure the scheduling resource of the reference signal in the foregoing manner, and further consider the numerologies of the first time unit and the second time unit in the scheduling resource of the reference signal. For example, a same numerology may be configured for the first time unit and the second time unit in the scheduling resource of the reference signal, to ensure that the second device can receive the reference signal in both the first time unit and the second time unit in the scheduling resource of the reference signal. For another example, the first device may alternatively configure different numerologies for the first time unit and the second time unit. In this case, the first device may configure priorities of the numerologies of the first time unit and the second time unit, and send the configured priorities of the numerologies to the second device. It may be understood that the priorities of the numerologies may also be pre-agreed on in a protocol. This is not specifically limited in the present invention. If determining, based on the indication information, that the second device belongs to the case 2, the first device may configure the scheduling resource of the reference signal in the foregoing manner without considering the numerologies of the first time unit and the second time unit in the scheduling resource of the reference signal.

FIG. 5 shows an apparatus 500 according to an embodiment of this application. The apparatus corresponds to the second device in the foregoing embodiment. Specifically, the apparatus 500 may be a terminal device, or may be a chip in a terminal device. The apparatus 500 includes a transceiver unit 520.

The transceiver unit 520 is configured to: receive a reference signal from a first device in a first time unit, and receive data from the first device or send data to the first device in a second time unit.

According to the apparatus in this embodiment of this application, the reference signal is received and the data is sent and received separately based on the first time unit and the second time unit, so that interference caused by the reference signal to the data is reduced as much as possible, thereby improving data transmission reliability. Optionally, the transceiver unit 520 receives the data from the first device or sends the data to the first device in the second time unit based on the reference signal.

Optionally, the second time unit includes scheduling resources of a control channel and/or a shared channel. Optionally, the first time unit and the second time unit do not overlap in time domain.

Optionally, the transceiver unit 520 is further configured to receive reference signal information from the first device, where the reference signal information indicates a reference position of the reference signal in the first time unit. Optionally, the apparatus further includes a processing unit 510, configured to determine, based on the reference signal information, the reference position of the reference signal in the first time unit.

Optionally, the reference signal information includes a start position of the first time unit; or the reference signal information includes a start position and an offset value of the first time unit, where the offset value is a time length relative to the start position.

Optionally, the transceiver unit 520 is further configured to receive a radio resource control RRC message from the first device, where the RRC message includes the reference signal information.

Optionally, the transceiver unit 520 is further configured to receive a downlink control indicator DCI from the second device, where the DCI is used to indicate a reference position of the reference signal in the first time unit. Optionally, when the first time unit is a plurality of symbols in a slot, the second device receives the downlink control indicator DCI from the first device based on the plurality of symbols, where the reference position is any one of the following:
a start position of the slot; a start symbol of the plurality of symbols; or an end symbol of the plurality of symbols.

Optionally, the physical signal includes at least one of the following signals: a demodulation reference signal DMRS, a sounding reference signal SRS, a signal carried on a physical random access channel PRACH, a synchronization signal, a phase tracking reference signal PTRS, or a channel state information-reference signal CSI-RS.

Optionally, the reference signal is used for data transmission. Optionally, the transceiver unit 520 is further configured to receive indication information sent by the first device, and the processing unit is further configured to disable the reference signal in the scheduling resource based on the indication information.

Optionally, the transceiver unit 520 is further configured to receive the reference signal information sent by the first device, where the reference signal information is used to indicate reference signal information required by the PDSCH to perform channel estimation, and the reference signal information may include a time length and/or a position occupied by the reference signal in the first time unit.

Optionally, when the reference signal information indicates a CSI-RS, the CSI-RS, the control channel, and the shared channel have the following same parameters: a precoding matrix, a QCL, and an antenna port.

When the reference signal information indicates an SRS, the SRS, the control channel, and the shared channel have the following same parameters: a precoding matrix, a QCL, and an antenna port.

It should be understood that the apparatus 500 herein is implemented in a form of a functional unit. The term "unit" herein may be an application-specific integrated circuit (application specific integrated circuit, ASIC), an electronic circuit, a processor (for example, a shared processor, a dedicated processor, or a group processor) configured to execute one or more software or firmware programs and a memory, a merged logic circuit, and/or another proper component that supports the described functions. In an optional example, a person skilled in the art may understand that the apparatus 500 may be specifically the first device in the foregoing embodiment. The apparatus 500 may be configured to perform procedures and/or steps corresponding to the first device in the foregoing method embodiment. To avoid repetition, details are not described herein again.

The apparatus 500 in the foregoing solutions has a function of implementing a corresponding step performed by the second device in the foregoing method. The function may be implemented by hardware, or may be implemented by hardware by executing corresponding software. The hardware or the software includes one or more modules corresponding to the foregoing function. For example, a sending unit may be replaced with a transmitter, a receiving unit may be replaced with a receiver, and another unit such as a determining unit may be replaced with a processor, to respectively perform a sending operation, a receiving operation, and a related processing operation in the method embodiments.

In this embodiment of this application, the apparatus in FIG. 5 may alternatively be a chip or a chip system, for example, a system on chip (system on chip, SoC). Correspondingly, the receiving unit and the sending unit may be a transceiver circuit of the chip. This is not limited herein.

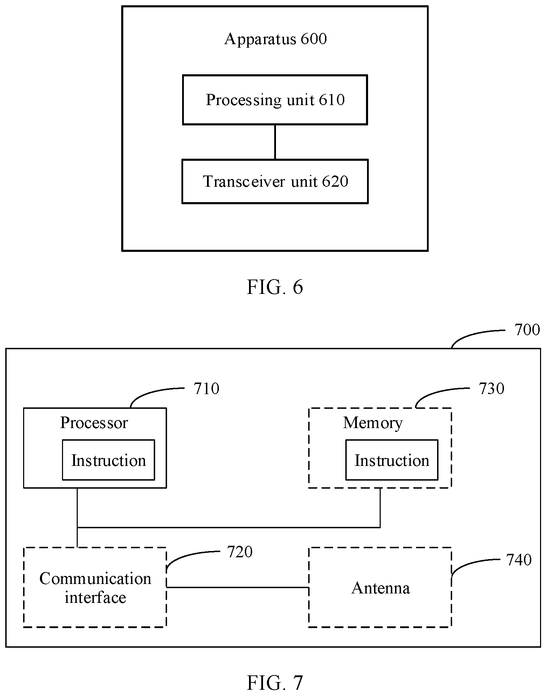

FIG. 6 shows an apparatus 600 according to an embodiment of this application. The apparatus corresponds to the first device in the foregoing embodiment. Specifically, the apparatus 600 may be a base station device or a terminal device, or may be a chip in a base station device or a terminal device. The apparatus 600 includes a transceiver unit 620. The transceiver unit 620 is configured to: send a reference signal to a second device in a first time unit; and transmit data to or receive data from the second device in a second time unit.

According to the apparatus in this embodiment of this application, a cycle time is divided into the first time unit and the second time unit, separately used for transmitting the reference signal and sending and receiving the data, so that interference caused by the reference signal to the data is reduced as much as possible, thereby improving data transmission reliability.

Optionally, the transceiver unit 620 transmits the data to or receives the data from the second device in the second time unit based on the reference signal.

Optionally, the second time unit includes scheduling resources of a control channel and/or a shared channel. Optionally, the first time unit and the second time unit do not overlap in time domain.

Optionally, the apparatus further includes a processing unit 610, configured to determine a cycle time, where the cycle time includes the first time unit and the second time unit.

Optionally, the transceiver unit 620 is further configured to send reference signal information to the second device, where the reference signal information indicates a reference position of the reference signal in the first time unit. Optionally, the reference signal information includes a start position of the first time unit; or the reference signal information includes a start position and an offset value of the first time unit, where the offset value is a time length relative to the start position.

Optionally, the transceiver unit 620 is further configured to send a radio resource control RRC message to the second device, where the RRC message includes the reference signal information.

Optionally, the transceiver unit 620 is further configured to send a downlink control indicator DCI to the second device, where the DCI is used to indicate a reference position of the reference signal in the first time unit.

Optionally, when the first time unit is a plurality of symbols in a slot, the first device sends the downlink control indicator DCI to the second device on the plurality of symbols, where the reference position is any one of the following:
a start position of the slot; a start symbol of the plurality of symbols; or an end symbol of the plurality of symbols.

Optionally, the physical signal includes at least one of the following signals: a demodulation reference signal DMRS, a sounding reference signal SRS, a signal carried on a physical random access channel PRACH, a synchronization signal, a phase tracking reference signal PTRS, or a channel state information-reference signal CSI-RS.

Optionally, the reference signal is used for data transmission. Optionally, the transceiver unit 620 is further configured to send indication information to the second device, to indicate the second device to disable the reference signal in the scheduling resource.

Optionally, the transceiver unit 620 is further configured to send the reference signal information to the second device, where the reference signal information is used to indicate reference signal information required by the PDSCH to perform channel estimation, and the reference signal information may include a time length and/or a position occupied by the reference signal in the first time unit.

Optionally, when the reference signal information indicates a CSI-RS, the CSI-RS, the control channel, and the shared channel have the following same parameters: a precoding matrix, a QCL, and an antenna port.

When the reference signal information indicates an SRS, the SRS, the control channel, and the shared channel have the following same parameters: a precoding matrix, a QCL, and an antenna port.

It should be understood that the apparatus 600 herein is implemented in a form of a functional unit. The term "unit" herein may be an application-specific integrated circuit (application specific integrated circuit, ASIC), an electronic circuit, a processor (for example, a shared processor, a dedicated processor, or a group processor) configured to execute one or more software or firmware programs and a memory, a merged logic circuit, and/or another proper component that supports the described functions. In an optional example, a person skilled in the art may understand that the apparatus 600 may be specifically the first device in the foregoing embodiment. The apparatus 600 may be configured to perform procedures and/or steps corresponding to the first device in the foregoing method embodiment. To avoid repetition, details are not described herein again.

The apparatus 600 in the foregoing solutions has a function of implementing a corresponding step performed by the first device in the foregoing method. The function may be implemented by hardware, or may be implemented by hardware by executing corresponding software. The hardware or the software includes one or more modules corresponding to the foregoing function. For example, a sending unit may be replaced with a transmitter, a receiving unit may be replaced with a receiver, and another unit such as a determining unit may be replaced with a processor, to respectively perform a sending operation, a receiving operation, and a related processing operation in the method embodiments.

In this embodiment of this application, the apparatus in FIG. 6 may alternatively be a chip or a chip system, for example, a system on chip (system on chip, SoC). Correspondingly, the receiving unit and the sending unit may be a transceiver circuit of the chip. This is not limited herein.

FIG. 7 shows another apparatus 700 according to an embodiment of this application. The apparatus 700 includes a processor 710. The apparatus 700 may further include a communication interface 720 and/or a memory 730. There may be one or more processors, memories, or communication interfaces.

Optionally, in a design, the processor 710, the communication interface 720, and the memory 730 may communicate with each other by using an internal connection path. The memory 730 is configured to store instructions, and the processor 710 is configured to execute the instructions stored in the memory 730, to control the communication interface 720 to send a signal and/or receive a signal.

Optionally, in a design, the processor 710 may include instructions (which may sometimes also be referred to as code or a program). The instructions may be run on the processor, so that the communication apparatus 700 performs the methods described in the foregoing embodiments. In another possible design, the communication apparatus 700 may further include a circuit, and the circuit may implement the method steps in the foregoing embodiments of the present invention.

Optionally, in a design, the communication apparatus 700 may include one or more memories 730, where the memory stores instructions. The instructions may be run on the processor 710, so that the communication apparatus 700 performs the methods described in the foregoing method embodiment.

It should be understood that the apparatus 700 may be specifically the first device or the second device in the foregoing embodiment, and may be configured to perform steps and/or procedures corresponding to the first device or the second device in the foregoing method embodiment. Optionally, the memory 730 may include a read-only memory and a random access memory, and provide instructions and data to the processor 710. Apart of the memory 730 may further include a nonvolatile random access memory. For example, the memory 710 may further store information about a device type. The processor 710 may be configured to execute the instructions stored in the memory; and when the processor 710 executes the instructions stored in the memory, the processor 710 is configured to perform steps and/or procedures corresponding to the first device or the second device in the foregoing method embodiment.

Optionally, the communication interface 720 is configured to receive or send information, a signal, data, and the like required for communication. For example, the communication interface 720 may be an element that has a transceiver function, for example, a transmitter (transmitter), a receiver (receiver), or a transceiver. Alternatively, the communication interface may communicate with another device via the foregoing element that has a transceiver function. The foregoing element that has the transceiver function may be implemented via an antenna and/or a radio frequency apparatus.

It should be understood that in this embodiment of this application, the processor of the foregoing apparatus may be a central processing unit (central processing unit, CPU), or the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In a possible implementation, the memory 730 may be included in the processor 710. Alternatively, it may be understood that the processor 710 may perform a function of storing the instructions by the memory 730. This is not limited in this embodiment of this application.

In a possible implementation, the memory 730 may be coupled to the processor 710. For example, the memory 730 may exist independently, and is connected to the processor 710 by using a communication bus. Alternatively, the memory 730 may be integrated with the processor 710. The memory 730 may be configured to store application program code for executing the technical solutions provided in the embodiments of this application, and the processor 710 controls the execution. The processor 710 is configured to execute the application program code stored in the memory 730, to implement the technical solutions provided in the embodiments of this application.

Optionally, the communication apparatus 700 may further include an antenna 740, and the communication interface 720 may implement a transceiver function of the apparatus 700 by using the antenna 740.

During specific implementation, in an embodiment, the apparatus 700 may further include an output device and an input device. The output device communicates with the processor 710, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 710, and may receive an input from a user in a plurality of manners. For example, the input device may be a mouse, a keyboard, a touchscreen device, a sensing device, or the like.

In an implementation process, steps in the foregoing method may be implemented by using a hardware integrated logic circuit in the processor or instructions in a form of software. The steps of the method disclosed with reference to the embodiments of this application may be directly performed by a hardware processor, or may be performed by using a combination of hardware in the processor and a software unit. The software unit may be located in a mature storage medium in the art, such as a random access memory, a flash memory, a read-only memory, a programmable read-only memory, an electrically erasable programmable memory, or a register. The storage medium is located in the memory, and the processor executes the instructions in the memory and completes the steps of the foregoing method in combination with the hardware of the processor. To avoid repetition, details are not described herein again.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification usually indicates an "or" relationship between the associated objects.

A person of ordinary skill in the art may be aware that, the method steps and the units described in the embodiments disclosed in this specification can be implemented by electronic hardware, computer software, or a combination thereof. To clearly describe interchangeability between the hardware and the software, the foregoing has generally described steps and compositions of each embodiment based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

A person skilled in the art may clearly understand that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or the units may be implemented in an electrical form, a mechanical form, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions in the embodiments of this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions in this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A transmission method, comprising:
sending, by a first device, a reference signal to a second device in a first time unit; and
transmitting, by the first device, data to or receiving data from the second device in a second time unit based on the reference signal, wherein
the second time unit comprises scheduling resources of a control channel and/or a shared channel, and the first time unit and the second time unit do not overlap in time domain.

2. The method according to claim 1, further comprising:
sending, by the first device, reference signal information to the second device, wherein the reference signal information indicates a reference position of the reference signal in the first time unit.

3. The method according to claim 2, wherein
the reference signal information comprises a start position of the first time unit; or
the reference signal information comprises a start position and an offset value of the first time unit, wherein the offset value is a time length relative to the start position.

4. The method according to claim 2 or 3, wherein the sending, by the first device, reference signal information to the second device specifically comprises:
sending, by the first device, a radio resource control RRC message to the second device, wherein the RRC message comprises the reference signal information.

5. The method according to claim 1, wherein the sending, by the first device, reference signal information to the second device specifically comprises:
sending, by the first device, a downlink control indicator DCI to the second device, wherein the DCI is used to indicate a reference position of the reference signal in the first time unit.

6. The method according to claim 5, wherein the sending, by the first device, a downlink control indicator DCI to the second device, wherein the DCI is used to indicate a reference position of the reference signal in the first time unit specifically comprises:
when the first time unit is a plurality of symbols in a slot, sending, by the first device, the downlink control indicator DCI to the second device on the plurality of symbols, wherein the reference position is any one of the following:
a start position of the slot;
a start symbol of the plurality of symbols; or
an end symbol of the plurality of symbols.

7. A transmission method, comprising:
receiving, by a second device, a reference signal from a first device in a first time unit; and
receiving, by the second device, data from the first device or sending data to the first device in a second time unit based on the reference signal, wherein
the second time unit comprises scheduling resources of a control channel and/or a shared channel, and the first time unit and the second time unit do not overlap in time domain.

8. The method according to claim 7, further comprising:
receiving, by the second device, reference signal information from the first device, wherein the reference signal information indicates a reference position of the reference signal in the first time unit.

9. The method according to claim 8, wherein
the reference signal information comprises a start position of the first time unit; or
the reference signal information comprises a start position and an offset value of the first time unit, wherein the offset value is a time length relative to the start position.

10. The method according to claim 8 or 9, wherein the receiving, by the second device, reference signal information from the first device specifically comprises:
receiving, by the second device, a radio resource control RRC message from the first device, wherein the RRC message comprises the reference signal information.

11. The method according to claim 7, wherein the receiving, by the second device, reference signal information from the first device specifically comprises:
receiving, by the second device, a downlink control indicator DCI from the first device, wherein the DCI is used to indicate a reference position of the reference signal in the first time unit.

12. The method according to claim 11, wherein the receiving, by the second device, a downlink control indicator DCI from the first device, wherein the DCI is used to indicate a reference position of the reference signal in the first time unit specifically comprises:
when the first time unit is a plurality of symbols in a slot, receiving, by the second device, the downlink control indicator DCI from the first device based on the plurality of symbols, wherein the reference position is any one of the following:
a start position of the slot;
a start symbol of the plurality of symbols; or
an end symbol of the plurality of symbols.

13. The method according to any one of claims 7 to 12, further comprising:
determining, by the second device, the reference position of the reference signal in the first time unit.

14. An apparatus, comprising a processor, wherein the processor is coupled to a memory, the memory is configured to store a program; and when the program is executed by the processor, the apparatus is enabled to perform the method according to any one of claims 1 to 13.

15. A computer-readable medium, configured to store a computer program, wherein the computer program comprises instructions used to implement the method according to any one of claims 1 to 13.

16. A computer program product, wherein the computer program product comprises computer program code; and when the computer program code is run on a computer, the computer is enabled to implement the method according to any one of claims 1 to 13.

17. A chip, comprising a processor, configured to read instructions stored in a memory, wherein when the processor executes the instructions, the chip is enabled to implement the method according to any one of claims 1 to 13.
